# EUROPÄISCHE PATENTANMELDUNG

(11) **EP 1 884 719 A1**
(43) Veröffentlichungstag der Anmeldung: **06.02.2008**
(21) Anmeldenummer: 06405329.1
(22) Anmeldetag: 31.07.2006
(51) Int. Cl.: F24F 5/00, F24F 11/00, F28D 20/02

(54) **Kühleinrichtung sowie Verfahren zu ihrem Betrieb**

(71) Anmelder: BARCOL-AIR AG, 8712 Stäfa (CH)
(72) Erfinder: Djordjevic, Bojan, 6343 Rotkreuz (CH)
(74) Vertreter: Wagner, Wolfgang Heribert

(57) **Zusammenfassung**

Zur Kühlung eines Raumes (1) wird während einer Kühlperiode einem Luftauslass (8) über eine Zuleitung (2) in einem Kühlaggregat (7) gekühlte Kühlluft zugeführt. Aufsteigende Luft aus dem Raum (1) kühlt sich an einem Wärmespeicher (12) ab, der ein Phasenwechselmaterial enthält, das dabei unter Aufnahme von Wärme allmählich von einer Tieftemperaturphase zu einer Hochtemperaturphase wechselt. Während einer Ladeperiode wird dem Wärmespeicher (12) ebenfalls über die Zuleitung (2) vorzugsweise ungekühlte Zuluft von aussen zugeführt und Wärme abgeführt. Deren Volumenstrom wird nach dem Ausgangssignal eines Phasensensors (23), der einen Parameter misst, welcher die Phasenzusammensetzung des Phasenwechselmaterials widerspiegelt, z.B. Temperatur, Druck, Festigkeit, Viskosität, Wärmeleitfähigkeit oder eine elektrische oder magnetische Eigenschaft wie die elektrische Leitfähigkeit sowie dem Ausgangssignal eines Aussentemperatursensors (25) so geregelt, dass das Phasenwechselmaterial spätestens am Ende der Ladeperiode ganz in der Tieftemperaturphase vorliegt. Die Zuluft wird zuerst weiter in den Raum (1) geleitet und später, wenn dort eine gewünschte Anfangstemperatur für die Kühlperiode erreicht ist, über eine Ableitung (14) direkt nach draussen.

## Beschreibung

### Technisches Gebiet

Die Erfindung betrifft eine Kühleinrichtung zum Kühlen eines Raumes gemäss dem Oberbegriff des Anspruchs 1 sowie ein Verfahren zu ihrem Betrieb. Solche Einrichtungen werden im Inneren von Gebäuden eingesetzt, z.B. in Läden und Büros.

### Stand der Technik

Eine gattungsgemässe Kühleinrichtung ist aus WO 01/38 810 A2 bekannt. Bei dieser Einrichtung wird der Zustand des Phasenwechselmaterials in keiner Weise überwacht. Bei einer solchen Einrichtung kann es daher leicht vorkommen, dass während einer Ladeperiode, die gewöhnlich mit der Nacht zusammenfällt, kein vollständiger Phasenwechsel in die Tieftemperaturphase erreicht wird, was zu ungenügender Wärmeaufnahme in der Kühlperiode während des Tages führen kann.

### Darstellung der Erfindung

Der Erfindung liegt die Aufgabe zu Grunde, eine gattungsgemässe Kühleinrichtung dahingehend zu verbessern, dass ein vollständiger Phasenwechsel in die Tieftemperaturphase während der Ladeperiode sichergestellt werden kann, sodass das Phasenwechselmaterial vollständig ausgenützt wird und während einer Kühlperiode eine seiner vollen Uebergangsenthalpie entsprechende Wärmemenge aufnimmt und damit die Kühlung des Raumes so weit wie möglich unterstützt.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine erfindungsgemässe Luftkühleinrichtung während einer Kühlperiode,

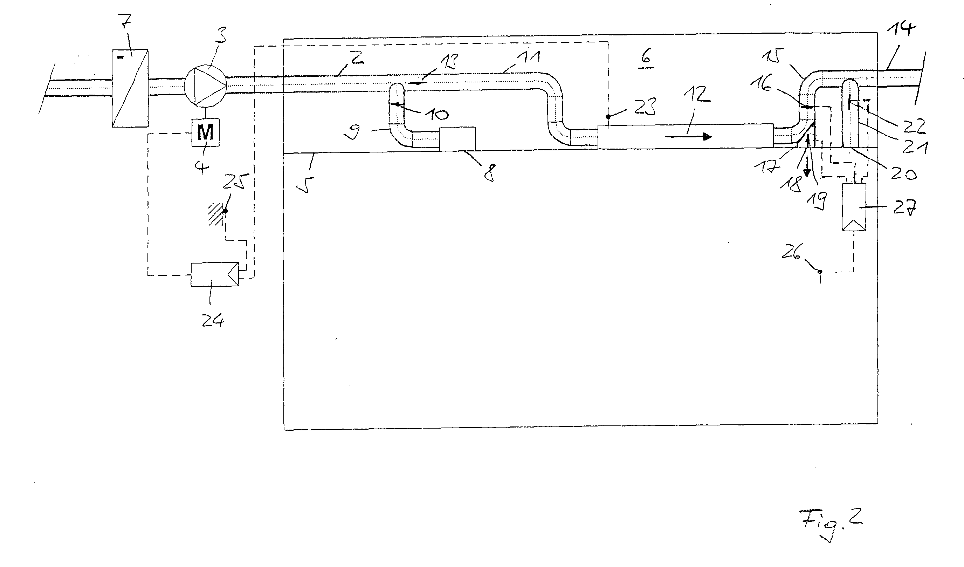

- Fig. 2: die erfindungsgemässe Luftkühleinrichtung während eines ersten Abschnitts einer Ladeperiode und
- Fig. 3: die erfindungsgemässe Luftkühleinrichtung während eines zweiten Abschnitts der Ladeperiode.

### Wege zur Ausführung der Erfindung

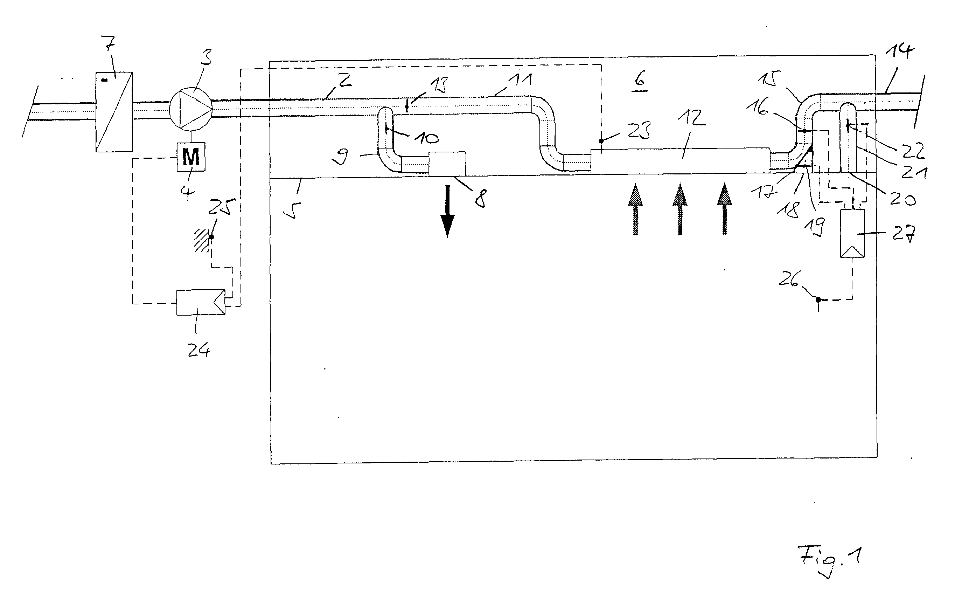

Die Kühleinrichtung (Fig. 1) dient zur Kühlung eines Raumes 1, z.B. eines Büros. Sie weist eine Zuleitung 2 auf, über welche mittels eines Ventilators 3, der von einem Elektromotor 4 angetrieben wird, Aussenluft angesaugt und in einen von einer Zwischendecke 5 abgeteilten Deckenbereich 6 oberhalb des Raumes 1 gefördert wird. Die Zuluft fliesst dabei durch ein dem Ventilator 3 vorgeordnetes Kühlaggregat 7, wo sie auf eine Kühllufttemperatur von z.B. 18° abgekühlt wird. Die Zwischendecke 5 weist mindestens einen luftdurchlässigen Teilbereich auf, in dem sie z.B. als mit einem Akustikvlies belegtes Lochblech ausgebildet ist.

An der Zwischendecke 5 ist ein Luftauslass 8 angeordnet, der über eine erste Verbindungsleitung 9 mit der Zuleitung 2 verbunden ist. Die Verbindungsleitung 9 ist durch eine umstellbare Klappe 10 sperrbar. Eine zweite Verbindungsleitung 11 verbindet die Zuleitung 2 mit der Oberseite eines im Deckenbereich 6 unmittelbar oberhalb der Zwischendecke 5 angeordneten Wärmespeichers 12, der ein Phasenwechselmaterial enthält.

Das Phasenwechselmaterial unterliegt in einem Uebergangsbereich, z.B. zwischen 22°C und 26°C einem Phasenwechsel, indem es bei steigender Temperatur von einer Tieftemperaturphase, in der es unterhalb von 22°C vorliegt und in der es fest ist, in eine Hochtemperaturphase übergeht, in der es oberhalb von 26°C vorliegt und in der es flüssig ist. Dabei nimmt es eine hohe spezifische Wärmemenge als Uebergangsenthalpie, welche im beschriebenen Fall eine Schmelzenthalpie ist, auf. Bei entsprechend sinkender Temperatur macht es den Phasenwechsel in der umgekehrten Richtung durch, wobei es die besagte Wärmemenge wieder abgibt. Die Uebergangsenthalpie kann z.B. das 50-fache der Wärmekapazität betragen, d.h. der Wärme, die das Phasenwechselmaterial ausserhalb des Uebergangsbereichs bei Erwärmung um 1°C aufnimmt. Geeignete Phasenwechselmaterialen, z.B. Wachse, Salzhydrate oder Fettsäuren, sind bekannt. Der Uebergangsbereich kann je nach Bedarf auch etwas anders gewählt werden, doch wird er bei der beschriebenen Anwendung in der Regel innerhalb eines Intervalls liegen, das durch 18°C und 30°C begrenzt ist.

Der Wärmespeicher 12 ist so ausgebildet, dass er mit der Zuluft wirksam Wärme austauscht. Er kann z.B. an der Oberseite Kühlrippen aus Metall aufweisen, die in das Phasenwechselmaterial hineinreichen. An der Unterseite ist er so ausgebildet, dass er auch mit aus dem Raum 1 aufsteigender Luft wirksam Wärme austauscht. Auch hier können Kühlrippen vorgesehen sein, die mit dem Phasenwechselmaterial in enger wärmeleitender Verbindung stehen. Der Wärmespeicher 12 kann aber auch auf sehr einfache Weise etwa aus Kunststoffbeuteln bestehen, die mit Phasenwechselmaterial gefüllt sind und auf der Zwischendecke 5 so aufliegen, dass sie dieselbe lückenlos bedecken. Die Verbindungsleitung 11 kann in oberhalb der Kunststoffbeutel liegenden Weitwurfdüsen enden, über welche die Kühlluft zugeführt wird. An die Oberseite des Wärmespeichers 12 geführte Luft bleibt jedoch so oder so von der Raumluft im wesentlichen getrennt. Die Verbindungsleitung 11 ist durch eine umstellbare Klappe 13 sperrbar.

Eine Ableitung 14 mit einem (nicht dargestellten) weiteren Ventilator dient dazu, Abluft nach aussen abzuführen. Die Oberseite des Wärmespeichers 12 ist über eine dritte Verbindungsleitung 15 mit der Ableitung 14 verbunden. Die Verbindung ist durch eine Klappe 16 sperrbar. Eine vierte Verbindungsleitung 17 zweigt von der dritten Verbindungsleitung 15 zu einem in der Zwischendecke 5 angeordneten weiteren Luftauslass 18 in den Raum 1 ab und ist ebenfalls durch eine Klappe 19 sperrbar. Und schliesslich ist ein Ablufteinlass 20 in der Zwischendecke 5 über eine fünfte Verbindungsleitung 21, die durch eine Klappe 22 ebenfalls sperrbar ist, mit der Ableitung 14 verbunden. Die Klappen 10, 13, 16, 19, 22 weisen elektrischpneumatische Antriebe auf.

Die Kühleinrichtung umfasst ausserdem einen Phasensensor 23, welcher am Wärmespeicher 12 angebracht ist. Er steht mit dem Phasenwechselmaterial in Wirkverbindung und überwacht einen Parameter, der die Phase, vorzugsweise den jeweiligen relativen Anteil des Phasenwechselmaterials, der in der Tieftemperaturphase oder der in der Hochtemperaturphase vorliegt, widerspiegelt. Das kann die Temperatur sein oder auch der Druck in einem das Phasenwechselmaterial enthaltenden Behälter, die Festigkeit, die Viskosität oder die Wärmeleitfähigkeit oder auch eine elektrische oder magnetische Eigenschaft wie die elektrische Leitfähigkeit, die Dielektrizitätskonstante oder die magnetische Permeabilität. Der Phasensensor muss an einer Stelle angebracht sein, an welcher der Zustand des Phasenwechselmaterials möglichst typisch für den durchschnittlichen Zustand desselben ist. Alternativ ist es auch möglich, einen Phasensensor aus mehreren an verschiedenen Stellen angebrachten Einzelsensoren vorzusehen und deren Signale zu einem Ausgangssignal zusammenzuführen, z.B. zu mitteln. In jedem Fall wird das Ausgangssignal an eine mit dem Phasensensor 23 verbundene erste Steuereinheit 24 geleitet, mit welcher auch ein Aussentemperatursensor 25 zur Messung der Temperatur der Aussenluft verbunden ist und welche den Elektromotor 4 des Ventilators 3 steuert.

Ein Raumtemperatursensor 26 zur Messung der Temperatur der Luft im Raum 1 ist mit einer zweiten Steuereinheit 27, die auch eine Schaltuhr enthält, verbunden, welche die Stellungen der Klappen 16, 19, 22 steuert.

Während einer Kühlperiode, die gewöhnlich mit den Tagesstunden zusammenfällt, in denen der Raum 1 auch benutzt wird und die Aussentemperatur oft höher ist als die Obergrenze eines z.B. zwischen 22°C und 26°C liegenden Sollbereichs der Raumtemperatur, wird die durch das Kühlaggregat 7 auf die Kühllufttemperatur abgekühlte Zuluft direkt durch die Verbindungsleitung 9 und den Luftauslass 8 in den Raum 1 geleitet. Dazu ist die Klappe 10 in der Verbindungsleitung 9 offen, während die Klappe 13 in der zum Wärmespeicher 12 führenden Verbindungsgleitung 11 sperrt.

Erwärmte Raumluft steigt zur Zwischendecke 5 auf und erreicht durch dieselbe hindurch die Unterseite des Wärmespeichers 12, wo sie sich abkühlt und wieder in den Raum 1 absinkt. Der Wärmespeicher 12 trägt dadurch wesentlich zur Kühlung des Raumes 1 bei, sodass die Zufuhr von Zuluft verhältnismässig gering sein und sich etwa auf die aus hygienischen Gründen notwendigen Werte beschränken kann. Er kann z.B. gerade so bemessen sein, dass zweimaliger Luftwechsel pro Stunde eintritt. Der Wärmespeicher 12 nimmt Wärme von der Raumluft auf und geht dabei allmählich von der Tieftemperaturphase, in der das Phasenwechselmaterial fest ist, in die Hochtemperaturphase über, in der es flüssig ist. Je nach Wärmelast kann der Uebergang vollständig oder auch nur teilweise eintreten.

Durch den Lufteinlass 20 wird aus dem Raum 1 über die Verbindungsleitung 21 Abluft in die Ableitung 14 abgezogen und nach aussen geleitet. Dazu ist ist die Klappe 22 in der Verbindungsleitung 21 offen, während die Klappen 16, 19 in den Verbindungsleitungen 15, 17 geschlossen sind.

Zu Beginn einer Ladeperiode, die gewöhnlich in die Nachtstunden fällt, werden die Klappen 10, 13, 19 aufgrund eines Signals der Schaltuhr in der Steuereinheit 27 mittels des Antriebs 20 umgestellt. Während der Ladeperiode wird ebenfalls durch die Zuluftleitung 2 mittels des Ventilators 3 Zuluft angesaugt. Da die Aussentemperatur dann meist verhältnismässig tief ist, muss sie jedoch gewöhnlich nicht gekühlt werden. Lediglich wenn ausnahmsweise die Aussentemperatur die gewünschte Anfangstemperatur im Raum zu Beginn der Kühlphase, welche etwa der Untergrenze des Sollbereichs entsprechen kann, fast erreicht oder sogar überschreitet, wird das Kühlaggregat 7 in Betrieb gesetzt und die Zuluft etwas unter diesen Wert, vorzugsweise auf die tiefer liegende Kühllufttemperatur gekühlt. Die Verbindungsleitung 9 ist jetzt durch die Klappe 10 gesperrt, während die Verbindungsleitung 11 offen ist. Die Zuluft wird daher vollständig dem Wärmespeicher 12 zugeleitet. Dort wird sie geringfügig erwärmt und über die Verbindungsleitung 15 und die Verbindungsleitung 17, welche ebenfalls offen ist, über den Luftauslass 18 dem Raum 1 zugeleitet.

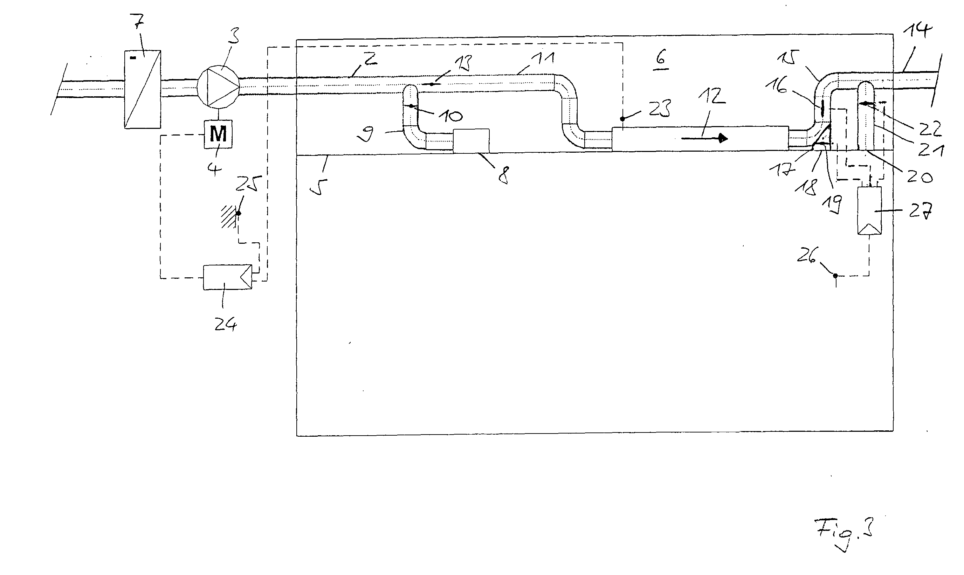

Obwohl in den Raum 1 Zuluft eingeführt wird, die zuerst über den Wärmespeicher 12 geleitet wurde, wird gewöhnlich die Anfangstemperatur im Raum 1 erreicht, bevor der Phasenwechsel abgeschlossen ist. Sobald die vom Raumtemperaturfühler 26 gemessene Temperatur der gewünschten Anfangstemperatur entspricht, werden daher von der Steuereinheit 25 die Klappen 16, 19, 22 derart umgestellt, dass (Fig. 3) die Verbindungsleitungen 17, 21 gesperrt und die Verbindungsleitung 15 offen ist. Die über die Zuleitung 2 zur Oberseite des Wärmespeichers 12 gelangende Zuluft wird dann über die Verbindungsleitung 15 und die Ableitung 14 abgeführt, sodass nur noch der Wärmespeicher 12 weiter gekühlt wird.

Der den Ventilator antreibende Elektromotor 4 wird von der Steuereinheit 24 so gesteuert, dass ein Volumenstrom aufrechterhalten wird, der so bemessen ist, dass ein im wesentlichen vollständiger Uebergang desselben in die Tieftemperaturphase bis zum Ende der Ladeperiode sichergestellt ist. Im einfachsten Fall kann der Volumenstrom etwa nach Massgabe des Anfangszustands des Phasenwechselmaterials zu Beginn der Ladeperiode eingestellt werden. Dabei kann eine Annahme über die Aussentemperatur getroffen werden. Günstiger ist es, wenn die tatsächliche Aussentemperatur für die Bestimmung des Volumenstroms mit herangezogen wird. So kann bei tieferer Aussentemperatur etwa ein kleinerer Volumenstrom eingestellt werden. Dazu wird das Ausgangssignal des Aussentemperatursensors 25 von der Steuereinheit 24 mit berücksichtigt. Wenn die Aussentemperatur zu hoch ist, z.B. über der Untergrenze des Uebergangsbereichs liegt, kann auch nach Erreichen der Anfangstemperatur im Raum 1 die Zuluft durch das Kühlaggregat 7 gekühlt werden, z.B. auf die Kühllufttemperatur.

Natürlich sind auch komplexere Regelungen möglich. So kann das Ausgangssignal des Phasensensors 23 ständig überwacht und der weitere Ablauf des Phasenwechsels extrapoliert werden. Falls die Extrapolation ergibt, dass der Phasenwechsel beim eingestellten Volumenstrom unvollständig bleiben dürfte, so kann letzterer angemessen erhöht oder, wenn dies nicht genügt, auch das Kühlaggregat 7 in Betrieb gesetzt werden. Umgekehrt kann der Volumenstrom vermindert werden, wenn die Extrapolation ergibt, dass der Phasenwechsel lange vor dem Ende der Ladeperiode abgeschlossen sein dürfte.

Es sind im Rahmen der Erfindung viele Abwandlungen der beschriebenen Kühleinheit und ihres Betriebs möglich. So können die Steuereinheiten 24, 27 zusammengefasst werden, auch für mehrere Räume oder ein ganzes Gebäude und eine digitale Recheneinheit umfassen, die etwa aufgrund gespeicherter Daten Extrapolationen und andere Rechnungen ausführt. Die Zuluft kann auch während des ersten Abschnitts der Ladeperiode über den Luftauslass 8 z.T. direkt in den Raum 1 geleitet werden, indem die Klappen 10, 13, 16, 22 offen und die Klappe 19 geschlossen sind usw.. Es können auch mehrere Wärmespeicher in Reihe oder parallel vorgesehen sein.

Es ist auch möglich, den Raum zusätzlich mit Wasser zu kühlen, z.B. durch an der Oberseite der Zwischendecke angebrachte von Kühlwasser durchflossene Kühlschienen. Auch der Wärmespeicher kann während der Ladeperiode zusätzlich oder auch ausschliesslich durch Wasser oder ein anderes flüssiges Kühlmedium gekühlt werden.

### Bezugszeichenliste

- 1: Raum
- 2: Zuleitung
- 3: Ventilator
- 4: Elektromotor
- 5: Zwischendecke
- 6: Deckenbereich
- 7: Kühlaggregat
- 8: Luftauslass
- 9: Verbindungsleitung
- 10: Klappe
- 11: Verbindungsleitung
- 12: Wärmespeicher
- 13: Klappe
- 14: Ableitung
- 15: Verbindungsleitung
- 16: Klappe
- 17: Verbindungsleitung
- 18: Luftauslass
- 19: Klappe
- 20: Lufteinlass
- 21: Verbindungsleitung
- 22: Klappe
- 23: Phasensensor
- 24: Steuereinheit
- 25: Aussentemperatursensor
- 26: Raumtemperatursensor
- 27: Steuereinheit

## Patentansprüche

1. Kühlvorrichtung für einen Raum (1), mit einer Zuleitung (2) zum Zuführen von Zuluft, einem an der Zuleitung (2) angeordneten Kühlaggregat (7) zum Kühlen und einem in der Zuleitung (2) angeordneten Ventilator (3) zum Fördern derselben sowie mit einem an einer Decke des Raumes (1) angeordneten Luftauslass (8) und einer sperrbaren Verbindungsleitung (9), über welche er mit der Zuleitung (2) verbunden ist sowie mit einem in einem Deckenbereich (6) angeordneten Wärmespeicher (12), welcher ein Phasenwechselmaterial enthält, das in einem Uebergangsbereich, der zwischen 18°C und 30°C liegt, einem Phasenwechsel zwischen einer Tieftemperaturphase und einer Hochtemperaturphase unterworfen ist und welcher geeignet ist, jeweils mit der Raumluft sowie mit einem ihm zuleitbaren Kühlmedium Wärme auszutauschen, **dadurch gekennzeichnet, dass** sie einen Phasensensor (23) zur Feststellung der Phasenzusammensetzung des Phasenwechselmaterials umfasst sowie eine mit demselben verbundene Steuerungseinheit (24) zur Steuerung des Volumenstroms und/oder der Temperatur des dem Wärmespeicher (12) zugeleiteten Kühlmediums.

2. Kühlvorrichtung nach Anspruch 1, **dadurch gekennzeichnet, dass** sie einen Aussentemperaturfühler (25) umfasst, welcher ebenfalls mit der Steuereinheit (24) verbunden ist.

3. Kühleinrichtung nach Anspruch 1 oder 2, **dadurch gekennzeichnet, dass** der Wärmespeicher (12) über eine sperrbare Verbindungsleitung (11) mit der Zuleitung (2) verbunden ist, sodass ihm Zuluft als Kühlmedium zuführbar ist.

4. Kühleinrichtung nach Anspruch 3, **dadurch gekennzeichnet, dass** sie eine Ableitung (14) zum Abführen von Abluft umfasst sowie eine Verbindungsleitung (15), über welche die Ableitung (14) mit dem Wärmespeicher (12) verbunden ist, derart, dass demselben von der Zuleitung (2) her zugeführte Zuluft über die Ableitung (14) abführbar ist.

5. Kühleinrichtung nach Anspruch 3 oder 4, **dadurch gekennzeichnet, dass** sie eine sperrbare Verbindungsleitung (15, 17) umfasst, über welche ein Lufteinlass (18) in den Raum (1) mit dem Wärmespeicher (12) verbunden ist, derart, dass demselben von der Zuleitung (2) her zugeführte Zuluft über den Luftauslass (18) dem Raum (1) zuführbar ist.

6. Kühleinrichtung nach einem der Ansprüche 3 bis 5, **dadurch gekennzeichnet, dass** sie eine Verbindungsleitung (21) umfasst, über welche ein Lufteinlass (20) aus dem Raum (1) mit der Ableitung (14) verbunden ist.

7. Kühleinrichtung nach einem der Ansprüche 1 bis 6, **dadurch gekennzeichnet, dass** sie einen Raumtemperaturfühler (26) umfasst, welcher mit einer Steuereinheit (27) zur Steuerung des Volumenstroms und/oder der Temperatur der Zuluft in den Raum (1) verbunden ist.

8. Verfahren zum Betrieb einer Kühleinrichtung nach einem der Ansprüche 1 bis 7, **dadurch gekennzeichnet, dass** während einer im wesentlichen mit dem Tag zusammenfallenden Kühlperiode jeweils mittels des Kühlaggregats (7) gekühlte Zuluft durch den Luftauslass (8) dem Raum (1) zugeführt wird, während aus dem Raum (1) aufsteigende Luft mit dem Wärmespeicher (12) Wärme austauscht, sodass das Phasenwechselmaterial allmählich mindestens teilweise von der Tieftemperaturphase in die Hochtemperaturphase übergeht und während einer im wesentlichen mit der Nacht zusammenfallenden Ladeperiode dem Wärmespeicher (12) Kühlmedium zugeführt wird, wobei aufgrund des Ausgangssignals des Phasensensors (23) die Zufuhr so eingestellt wird, dass das Phasenwechselmaterial spätestens am Ende der Ladeperiode im wesentlichen vollständig in Tieftemperaturphase vorliegt.

9. Verfahren nach Anspruch 8 zum Betrieb einer Kühleinrichtung nach den Ansprüchen 2 und 3, **dadurch gekennzeichnet, dass** aufgrund des Ausgangssignals des Phasensensors (23) und des Ausgangssignals des Aussentemperatursensors (25) die Zufuhr von Zuluft während der Ladeperiode so eingestellt wird, dass das Phasenwechselmaterial spätestens am Ende der Ladeperiode im wesentlichen vollständig in Tieftemperaturphase vorliegt.

10. Verfahren nach Anspruch 8 oder 9 zum Betrieb einer Kühleinrichtung nach Anspruch 7, **dadurch gekennzeichnet, dass** während der Ladeperiode dem Raum (1) Zuluft zugeführt wird, bis eine gewünschte Anfangstemperatur erreicht ist und daraufhin die Zuführung von Zuluft in den Raum (1) gesperrt wird.
